# EUROPÄISCHE PATENTSCHRIFT

(11) **EP 1 563 691 B1**
(45) Veröffentlichungstag und Bekanntmachung des Hinweises auf die Patenterteilung: **16.07.2008**
(21) Anmeldenummer: 03767418.1
(22) Anmeldetag: 10.11.2003
(51) Int. Cl.: H04Q 7/32

(54) **VERFAHREN UND ANORDNUNG ZUR BEREITSTELLUNG EINES VERBINDUNGSWEGES ZU EINEM MOBILFUNKNETZ SOWIE HIERFUER GEEIGNETES TELEKOMMUNIKATIONSENDGERAET**
METHOD AND DEVICE FOR PROVIDING A CONNECTING PATH TO A MOBILE RADIO NETWORK AND TELECOMMUNICATIONS TERMINAL SUITABLE THEREFOR
PROCEDE ET DISPOSITIF DE MISE EN OEUVRE D'UNE VOIE DE CONNEXION VERS UN RESEAU DE TELEPHONIE MOBILE ET TERMINAL DE COMMUNICATION DESTINE A CET EFFET

(30) Priorität: 12.11.2002 DE 10253436
(43) Veröffentlichungstag der Anmeldung: 17.08.2005
(73) Patentinhaber: Deutsche Telekom AG, 53113 Bonn (DE)
(72) Erfinder: BAUMKÖTTER, Manfred, 48346 Ostbevern (DE)
(86) Internationale Anmeldenummer: PCT/DE2003/003729
(87) Internationale Veröffentlichungsnummer: WO 2004/045222

(56) Entgegenhaltungen:
- WO-A-02/41580
- US-A1- 2002 031 108
- US-B1- 6 243 581

## Beschreibung

Die Erfindung betrifft ein Verfahren und eine Anordnung zur Bereitstellung eines Verbindungsweges zu einem Mobilfunknetz sowie ein hierfür geeignetes Telekommunikationsendgerät, wobei letzteres im Kontext der Erfindung im allgemeinen als Kommunikationsgerät oder Telekommunikationsendgerät bezeichnet werden soll, selbst wenn das Gerät gegebenenfalls nicht ausschließlich zu Kommunikationszwecken verwendbar ist.

Bei den bekannten Mobilfunknetzen werden die zur mobilen Telekommunikation genutzten Endgeräte, wie Handys oder vergleichbare Geräte mit gegebenenfalls erweiterter Funktionalität, beim Aufbau einer Telekommunikationsverbindung ausschließlich über Funksysteme des entsprechenden Mobilfunknetzes mit den Vermittlungseinheiten, den so genannten MSC (Mobile Switching Center = Mobilvermittlungseinrichtung) verbunden. Das Mobilfunkgerät wird dabei per Funkkanal über eine Funkfeststation (BSS - Base Station Subsystem) mit der MSC verbunden, wobei die Verbindung, in Abhängigkeit vom Aufenthaltsort des mobilen Telekommunikationsendgerätes und der diesem entsprechenden Funkzelle, über eine Sende-/Empfangsstation (BTS - Base Tranceiver Station) sowie die Steuereinrichtung (Base Station Control) der Funkfeststation geführt wird. Ein Problem besteht dabei darin, dass die Zahl der freien Funkkanäle zu einer BSS und damit auch zur jeweiligen MSC begrenzt ist und es so zumindest bei Mobilfunknetzen der gegenwärtigen Generation zu Engpässen hinsichtlich der Verfügbarkeit von Telekommunikationsverbindungen kommen kann. Um dem zu begegnen, sind die Verbindungsgebühren teilweise relativ hoch, um insoweit die Belegungszeiten der Kanäle in Grenzen zu halten. Ein weiteres Problem von Mobilfunknetzen ist darin zu sehen, dass durch Funklöcher oder die in einigen Bereichen bestehende Abschirmung der Funkwellen (beispielsweise in Kellern mancher Häuser) manchmal der Aufbau einer Telekommunikationsverbindung mit einem Mobilfunkgerät nicht möglich ist.

In Dokument US 6243581 B1 wird ein Telekommunikationsendgerät offenbart, daß ein automatisches Roaming zwischen WLAN und GSM Netzwerken bietet. Ein Netzwerkzugangsvermittler leitet die Daten zu einer ersten (WLAN) oder zu einer zweiten (GSM), drahtlosen Schnittstelle abhängig davon, wieviel Bandbreite in der Verbindung benötigt wird.

Aufgabe der Erfindung ist es, die Nachteile des Standes der Technik zu überwinden. Insbesondere soll ein Verfahren aufgezeigt werden, welches beispielsweise aus Kostengründen oder zur Überwindung funktechnischer Schwierigkeiten einen Verbindungsaufbau von bzw. zu einem in einem Mobilfunknetz verwendbaren Telekommunikationsendgerät über alternative Verbindungswege ermöglicht. Die Aufgabe besteht weiterhin darin, eine Anordnung und ein Telekommunikationsendgerät, zu schaffen, welche zur Durchführung des vorgeschlagenen Verfahrens einsetzbar sind.

Die Aufgabe wird durch ein Verfahren zur Bereitstellung eines Verbindungsweges zu einem Mobilfunknetz mit den Merkmalen des Hauptanspruchs gelöst. Vorteilhafte Aus- bzw. Weiterbildungen des erfindungsgemäßen Verfahrens sind durch die Unteransprüche gegeben. Eine Anordnung und ein Telekommunikationsgerät zur Durchführung des Verfahrens werden durch die sich hierauf beziehenden Vorrichtungsansprüche 10, 15 und 18 sowie, hinsichtlich möglicher Ausgestaltungen, durch auf diese rückbezogene Unteransprüche charakterisiert.
Das erfindungsgemäße Verfahren geht von der Überlegung aus, die herkömmlichen, über eine Funkfeststation führenden Verbindungswege eines Mobilfunknetzes im Bereich zwischen einem zum Betrieb im Mobilfunknetz geeigneten Telekommunikationsendgerät und den Zugangs- und Vermittlungseinheiten des Mobilfunknetzes zu umgehen, sofern dies aus Verfügbarkeitsgründen erforderlich ist oder aus anderen Gründen vom Benutzer des Telekommunikationsendgeräts gewünscht wird und darüber hinaus entsprechend den im Weiteren dargestellten Voraussetzungen möglich ist. Nach dem vorgeschlagenen Verfahren wird für den Aufbau einer Telekommunikationsverbindung zwischen dem im Mobilfunknetz zu verwendenden Telekommunikationsendgerät und einer Gegenstelle als Verbindungsweg zwischen diesem Telekommunikationsendgerät und den Zugangs- und Vermittlungseinheiten des Mobilfunknetzes wahlweise eine Funkverbindung (Funkweg) oder eine das Internet einbeziehende Verbindung (Internetverbindungsweg) genutzt. Dies geschieht selbsttätig oder veranlasst durch einen Benutzer des Telekommunikationsendgerätes. Der Internetverbindungsweg wird dabei durch die Zugangs- und Vermittlungseinheiten sowie das Telekommunikationsendgerät wie eine weitere Funkzelle des Mobilfunknetzes behandelt. Insbesondere betrifft dies die Abläufe beim Einbuchen bzw. Anmelden des Telekommunikationsendgerätes beim Mobilfunknetz nach dem Einschalten sowie die Frage des Umschaltens des Verbindungsweges zwischen Funkweg und Internetweg bzw. umgekehrt im Zuge eines Changeover (bei Nichtbestehen einer Verbindung) oder eines Handover (bei bestehender Verbindung). Das von dem Benutzer verwendete Telekommunikationsendgerät veranlasst demnach die Einbeziehung des Internet bei Erkennen eins möglichen Internetweges entweder automatisch oder nach Einwilligung durch den Nutzer, wobei es sich gegebenenfalls bei einer virtuellen, mit dem Internetverbindungsweg korrespondierenden Funkzelle (z. B. einem WLAN Accesspunkt) nach den Regeln des lokalen Mobilfunknetzwerks (ggf. umfassend lokale Authentifikation, DHCP u.ä.) einbucht. Anschließend erfolgt ein Changeover, Handover oder bei Neustart - beispielsweise im Falle des Einschaltens des Telekommunikationsendgerätes-eine Authentifikation im Mobilfunksystem mit Etablierung des Internetverbindungswegs für den Zugang zum Mobilfunknetz. Selbstverständlich ist die Durchführung des Verfahrens an das Vorhandensein eines schon kurz erwähnten Accesspunktes gebunden, durch welchen dem für den Betrieb im Mobilfunknetz geeigneten Telekommunikationsendgerät - vorzugsweise einem Handy - der Zugang zum Internet ermöglicht ist. Entsprechend einer praxisgerechten und bevorzugten Ausführungsform des Verfahrens wird die Verbindung des Telekommunikationsendgerätes zum Internet über eine Internetzugangseinheit aufgebaut, mit welcher das Telekommunikationsendgerät zu diesem Zweck in einem LAN (Local Area Network) vernetzt wird. Dabei wird im Falle des Aufbaus einer vom Handy abgehenden Verbindung eine der Zugangs- und Vermittlungseinheiten des Mobilfunknetzes über den von der Internetzugangseinheit ausgehenden Internetverbindungsweg vermittels einer ihr zugeordneten IP-Adresse angesprochen. Bevorzugt ist das Herstellen der Verbindung über eine IP-adressierbare Mobilvermittlungseinrichtung (MSC - Mobile Switching Center oder damit vergleichbare Einheit) des Mobilfunknetzes. Sofern durch das Telekommunikationsendgerät (beispielsweise ein Handy) mehrere derartiger Accesspunkte erkannt werden, können diese gegebenenfalls auch in einem Display des Gerätes gelistet werden. Denkbar ist aber auch eine experimentelle Abarbeitung der Accesspunkte oder deren Abarbeitung durch eine Suche nach bestimmten Kennwerten.

Gemäß einer Weiterbildung lässt es das Verfahren zu, dass ein zu einer Zugangs- und Vermittlungseinheiten des Mobilfunknetzes bestehender Internetverbindungsweg durch diese gegebenenfalls vorübergehend auf eine geographisch günstiger gelegene geroutet wird. Dazu wird die in bzw. bei der Konfiguration der Anordnung, vorzugsweise im Telekommunikationsendgerät, hinterlegte IP-Adresse durch die betreffende Zugangs- und Vermittlungseinheit temporär geändert. Einer weiteren Ausgestaltung zur Folge erfolgt vor einem Verbindungsaufbau zu einer der Zugangs- und Vermittlungseinheiten des Mobilfunknetzes eine Anfrage bei einem Server, in deren Ergebnis der Server dem Telekommunikationsendgerät die IP-Adresse für eine bevorzugt anzusprechende Zugangs- und Vermittlungseinheiten des Mobilfunknetzes übermittelt. Die Anfrage beim Server erfolgt dabei selbstverständlich unter Übermittlung von Informationen zum aktuellen Funkbereich des Telekommunikationsendgerätes. Entsprechend einer besonders bevorzugten Ausführungsform der Erfindung ist es außerdem vorgesehen, dass die Nutzung einer über das Internet geführten Verbindung zu den Einheiten (beispielsweise den MSC) des Mobilfunknetzes tariflich begünstigt wird. Dies wird dadurch realisiert, dass die über das Internet angesprochenen Zugangs- und Verbindungseinheiten des Mobilfunknetzes beim Aufbau einer entsprechenden Verbindung die Tariffierung ändern und dies gegebenenfalls dem Benutzer des Telekommunikationsendgerätes signalisiert wird.

Die Einbindung des Telekommunikationsendgerätes in das LAN mit der Internetzugangseinheit kann in herkömmlicher Weise drahtgebunden oder über Funk (Wireless LAN - WLAN) oder auch optisch, nämlich vorzugsweise über eine Infrarot-Übertragungsstrecke (IR-LAN), erfolgen. In vorteilhafter Weiterbildung soll das erfindungsgemäße Verfahren, bezogen auf das Telekommunikationsendgerät, den Aufbau ankommender und abgehender Verbindungen mit Nutzung des Internetverbindungswegs erlauben. Dazu wird für die ankommenden Verbindungen in einem Aufenthaltsregister (VLR - Visited Location Register) der Zugangs- und Vermittlungseinheiten des Mobilfunknetzes als Aufenthaltsangabe (LA - Location Area) die Angabe Internet, also vorzugsweise die Internetadresse (IP-Adresse) und gegebenenfalls weitere Adressierungsinformationen des jeweiligen Telekommunikationsendgerätes gespeichert. Für die betreffende, dem Telekommunikationsendgerät im Mobilfunknetz zugeordnete Rufnummer wird also die Angabe Internet anstelle des Funkbereichs seiner momentanen Erreichbarkeit gespeichert. Dabei wird, wie dargestellt, die Internetadresse unter der das Gerät nun erreichbar ist, gespeichert, so dass das Internet hierbei im Grunde wie eine weitere Funkzelle behandelt wird. Wenn das Telekommunikationsendgerät (z.B. Handy) nicht direkt adressierbar ist (IP-Masquerading), werden zusätzlich die TCP/UDP Port-Nummern gespeichert, über welche die Anbindung des Gerätes an das Internet besteht. Das System, vorzugsweise das Telekommunikationsendgerät bzw. Handy sendet hier zyklisch Prüfinformationen aus, um die Verbindung zu sichern (refresh der entsprechenden Einträge im Translation Table des Routers). Sich ändernde Portnummern werden entsprechend gespeichert.
Bei einer besonders vorteilhaften Weiterbildung des erfindungsgemäßen Verfahrens erfolgt bei einer unter Einbeziehung des Internet bestehenden Verbindung, im Falle des Unterschreitens von für diese Verbindung festgelegten Qualitätsparametern oder der Unterbrechung der Verbindung, deren automatische Umschaltung auf den normalen Mobilfunkbetrieb. Dies geschieht, indem die Verbindung auf eine Funkfeststation des Mobilfunknetzes umgeschaltet und vermittels einer Sende-/Empfangsstation der BSS, welche der dem Aufenthaltsort des Telekommunikationsgeräts entsprechenden Funkzelle zugeordnet ist, und der zugehörigen zentralen Steuereinrichtung (BSC) der BSS zur MSC geleitet wird. Dabei erfolgt die Umschaltung der Verbindungswege, zwischen reiner Mobilfunkverbindung oder Verbindung mit Einbeziehung des Internet durch eine im Rahmen eines Handover/Changeover geregelte Umschaltung des physikalischen Signalweges. Das Telekommunikationsendgerät, vorzugsweise Handy, arbeitet dann wieder standardmäßig, also im reinen Funkbetrieb, bis erneut eine nutzbare Internetverbindung erkannt wird. Die Überprüfung der Qualitätswerte kann zum Beispiel durch zyklisch ausgetauschte Prüftexte erfolgen. Wie bereits erwähnt, findet gegebenenfalls auch ein Changeover, also eine Weiterleitung bei nicht bestehender Verbindung statt, so dass das Handy unter Umständen auch bei Nichtbestehen einer Verbindung von einer gewöhnlichen Funkzelle an die "virtuelle" Funkzelle mit Einbeziehung eines Internetverbindungsweges übergeben wird. Sofern das Verfahren so ausgestaltet ist, dass es hierfür einer Zustimmung des Handynutzers nicht bedarf, finden diese Vorgänge (abgesehen von einer eventuellen Gebühreninformation) genauso wie beim herkömmlichen Mobilfunkbetrieb im Hintergrund und unbemerkt vom Nutzer statt.
Die erfindungsgemäße Anordnung zur Durchführung des vorgestellten Verfahrens umfasst ein zum Betrieb in einem Mobilfunknetz geeignetes Telekommunikationsendgerät, eine mit diesem in einem LAN vernetzbare Internetzugangseinheit sowie eine über das Internet IP-adressierbare und in die Infrastruktur eines Mobilfunknetzes eingebundene Zugangs- und Vermittlungseinheit (beispielsweise MSC).
Gemäß einer möglichen Ausbildung der Erfindung handelt es sich bei dem für den Betrieb in einem Mobilfunknetz geeigneten Endgerät um eine entsprechend ausgebildete TK-Anlage, nämlich eine TK-Anlage mit einer Mobilfunkeinheit. Die TK-Anlage weist dabei vorteilhafterweise eine Chipkartenleseeinheit zum Lesen von Chipkarten eines Mobilfunkbetreibers auf. Entsprechend einer besonders bevorzugten Ausführungsform ist die TK-Anlage außerdem DSL-fähig, das heißt, sie nutzt einen DSL-Anschluss um die Verbindung über das Internet zu den Zugangs- und Vermittlungseinrichtungen des Mobilfunknetzes herzustellen. Bei dieser Ausbildung der erfindungsgemäßen Anordnung kann seitens des Nutzers der Erfindung gegebenenfalls sogar auf einen herkömmlichen analogen oder digitalen (ISDN) Standardtelefonanschluss verzichtet werden. Hierdurch kann beispielsweise die Grundgebühr für einen solchen Festnetzanschluss eingespart werden. Dabei sind Umzüge bzw. Ortsveränderungen aufgrund der Benutzerverwaltung in den Zugangs- und Vermittlungseinrichtungen des Mobilfunknetzes problemlos möglich.
Bei einer besonders vorteilhaften Weiterbildung der Erfindung umfasst die zur Durchführung des Verfahrens geeignete Anordnung außerdem Mittel, durch welche einem Nutzer des Telekommunikationsendgerätes gegebenenfalls in geeigneter Weise signalisiert wird, dass bei einer Nutzung des Internetverbindungswegs eine gegenüber der Nutzung des Funkverbindungswegs kostengünstigere Verbindung möglich ist.

Ein zur Durchführung des Verfahrens geeignetes Telekommunikationsendgerät ist als Mobiltelefon (Handy) ausgebildet, welches neben den Funktionseinheiten (Sende- und Empfangseinheit etc.) für den Betrieb im Mobilfunknetz über eine Steuereinheit mit einem Speicher und Mittel zur Einbindung des Gerätes in ein LAN verfügt. Die Steuereinheit dient dabei zum einen der Steuerung des Wechsels zwischen den unterschiedlichen Betriebsmodi, welche die ausschließlich mobilfunkgestützte (Mobilfunkbetrieb) oder eine zumindest teilweise intemetgestützte (Internetbetrieb) Telekommunikation betreffen. Zum anderen wird im Internetbetrieb vermittels der Steuereinheit der LAN-basierte Datenaustausch mit der jeweiligen Internetzugangseinheit gesteuert. Zur Einbindung des Telekommunikationsendgerätes in das LAN können in dem Gerät unterschiedliche Mittel, alternativ oder auch gleichzeitig ausgebildet sein. Neben der Möglichkeit eines normalen drahtgebundenen, beispielsweise mittels geeigneter Stecker erfolgenden Anschlusses an das LAN kommt dabei bevorzugt eine Einheit zum funkgestützten Anschluss an das LAN in Betracht. Die LAN-Verbindung zwischen dem Telekommunikationsendgerät und der Internetzugangseinheit ist dann als sogenanntes Wireless LAN (WLAN) ausgebildet. Eine andere Möglichkeit besteht darin, das Telekommunikationsendgerät auf optischem Wege in das LAN einzukoppeln. In dem Gerät wird zu diesem Zweck eine IR-Sende- und -Empfangseinheit angeordnet. Selbstverständlich muss die zur Einwahl in das Internet dienende Internetzugangseinheit für diese Art der Kopplung ebenfalls über eine entsprechende IR-Einheit verfügen.
Eine andere Ausbildungsform eines Telekommunikationsendgerätes, welches die Nutzung der Strukturen eins Mobilfunknetzes zumindest unter Einbeziehung des Internet ermöglicht, ist in Form eines entsprechend ausgestatten Laptops gegeben. Der Laptop verfügt dabei über eine Netzwerkkarte zur drahtgebundenen oder drahtlosen Verbindung mit einem LAN und eine Chipkartenleseeinheit zum Lesen von Chipkarten eines Mobilfunkbetreibers. Zum Zweck der Sprachkommunikation, also des Führens eines herkömmlichen Telefonats verfügt der zur Durchführung des Verfahrens hergerichtete Laptop aber außerdem über eine Soundkarte und ein Headset.

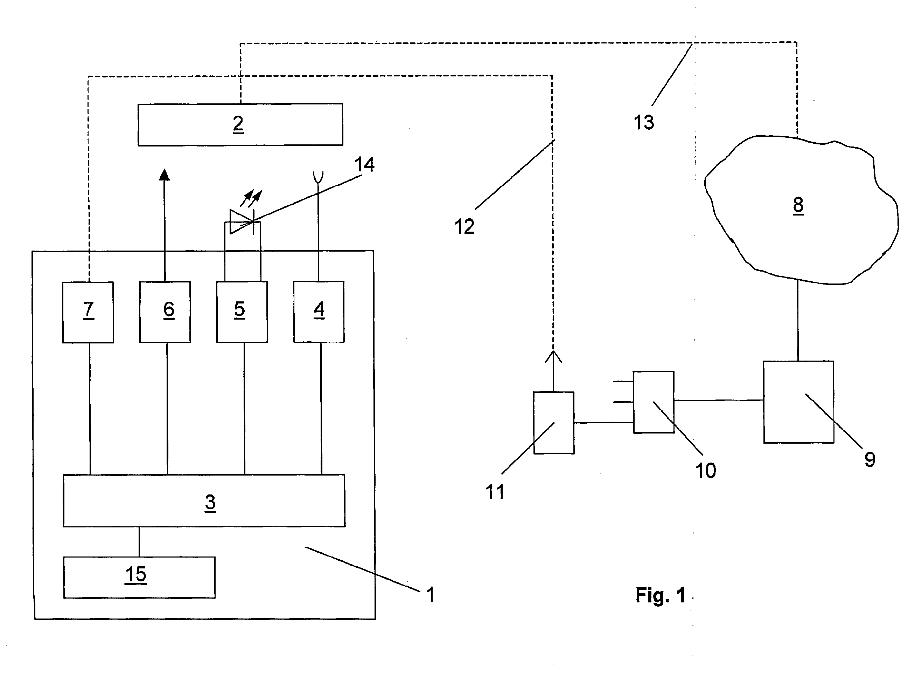

Die Erfindung soll nachfolgend anhand eines Ausführungsbeispiels nochmals im Detail erläutert werden. Hierzu zeigt die
- Fig. 1:: Den schematischen Aufbau der erfindungsgemäßen Anordnung unter Einbeziehung eines zur Durchführung des Verfahrens geeigneten Telekommunikationsendgerätes.

In der Fig. 1 sind sowohl der grundsätzliche Aufbau einer Anordnung zur Durchführung des Verfahrens als auch ein in diese Anordnung einbezogenes Telekommunikationsendgerät beispielhaft in einer schematischen Darstellung veranschaulicht. In die Darstellung sind die Einheiten zur Herstellung einer normalen Mobilfunkverbindung einbezogen, da die Möglichkeit des Aufbaus einer solchen Mobilfunkverbindung gemäß der Erfindung erhalten bleiben soll und sich der alternative Weg über das Internet, wie bereits dargestellt, insoweit technisch gleichberechtigt (allenfalls tariflich bevorzugt) quasi in die Struktur des bestehenden Mobilfunknetzes einordnet.
Die im Beispiel dargestellte Anordnung umfasst im Wesentlichen das zur Nutzung in einem Mobilfunknetz geeignete Telekommunikationsendgerät 1, eine mit dem Telekommunikationsendgerät 1 in einem LAN vernetzbare Internetzugangseinheit 2 sowie die über das Internet IP-adressierbare und in die Infrastruktur des Mobilfunknetzes eingebundene MSC 9. Bei der Internetzugangseinheit 2 handelt es sich beispielsweise um einen WLAN-Accesspunkt, der direkt über einen Hub bzw. einen Switch mit einem DSL-Router verbunden ist. Wenn der Accesspunkt offen (ohne Kennwortschutz) arbeitet und eine DHCP-Funktion verwendet wird (bei einem DSL-Router kann häufig eine DHCP-Funktion aktiviert werden), haben über diesen Accesspunkt beliebige Endgeräte einen Internetzugang. Der MSC 9 sind die BTS 11 und die BSC 10 einer üblichen Mobilfunkstruktur zur Herstellung einer Funkverbindung 12 zugeordnet. Bei dem dargestellten Telekommunikationsendgerät 1 handelt es sich beispielsweise um ein Mobiltelefon (Handy) dessen für seinen gewöhnlichen Gebrauch vorhandene Einheiten 3, 7, 15, wie die Sende-/Empfangseinheit 7, um zusätzliche Einheiten 4, 5, 6 ergänzt wurden, wobei es sich bei der Steuereinheit bzw. dem Controller 3 um eine in einem normalen Handy vorhandene, hier jedoch für die erweiterte Funktionalität des mobilen Telekommunikationsendgerätes 1 angepasste Einheit handelt. Bei den letztgenannten Einheiten 4, 5, 6 handelt es sich um Einheiten, welche es ermöglichen das Telekommunikationsendgerät 1 auf unterschiedliche Weise mit der Internetzugangseinheit 2 in einem LAN zu vernetzen. Während die Einheit 4 eine herkömmliche LAN-Verbindung über Kabel ermöglicht, kann wahlweise über die Einheiten 5 und 6 eine drahtlose LAN-Verbindung zur Internetzugangseinheit 2 aufgebaut werden, wobei letztere selbstverständlich jeweils in entsprechender Weise ausgestattet sein muss. So kann mittels der Einheit 6 eine funkgestützte LAN-Verbindung (WLAN) und über die Einheit 5 mit zugehörigem optischen Element 14 eine IR-LAN-Verbindung zur Internetzugangseinheit 2 hergestellt werden, sofern diese ihrerseits über eine Funkkarte oder eine IR-Sende-/Empfangseinheit verfügt. Vermittels der Internetzugangseinheit 2 kann das Telekommunikationsendgerät 1 eine Internetverbindung 13 und nach Erkennen des Bestehens der Internetverbindung 13 über das Internet 8 eine Verbindung zur IP-adressierbaren MSC 9 aufbauen. Der "Flaschenhals" Funkverbindung 12 über BTS 11 und BSC 10 zur MSC 9 kann somit umgangen werden. Die IP-Adresse der MSC 9 ist vorher bei der Konfiguration des Systems in dem Telekommunikationsendgerät 1 zu hinterlegen. Denkbar ist es dabei auch, die IP-Adresse anschließend temporär durch das Vermittlungssystem zu ändern, um die Verbindung auf ein Vermittlungssystem umzulenken, das geographisch günstiger liegt oder weniger ausgelastet ist. Bei stabiler Internetverbindung 13 sollen nach dem Verbindungsaufbau die gleichen Funktionen ablaufen wie im Standard-Betrieb beim Wechsel des Funkbereichs (LA - Location Area). Technisch soll sich der Internetverbindungsweg 8, 13 wie ein weiterer Funkbereich darstellen. Im VLR (Visited Location Register) der MSC 9 ist dabei die IP-Adresse des Telekommunikationsendgerätes 1 als LA vermerkt, so dass, bezogen auf das Telekommunikationsendgerät 1, abgehende und ankommende Verbindungen wie im normalen Mobilfunknetz möglich sind. Die Anordnung kann auch noch über in der Fig. nicht dargestellte Mittel verfügen, welche dem Nutzer gegebenenfalls signalisieren, dass unter Einbeziehung des Internetverbindungswegs 8, 13 eine kostengünstigere Verbindung aufgebaut werden kann. Dies ist insbesondere dann sinnvoll, wenn entsprechend einer vorteilhaften Ausgestaltung der Anordnung durch die Zugangs- und Vermittlungseinheiten 9, 10, 11 eine Änderung der Tariffierung vorgenommen wird, sofern diese über das Internet 8 angesprochen werden. Gegebenenfalls erfolgt also die Etablierung des Verbindungsweges zum Mobilfunknetz automatisch unter Einbeziehung des Internets 8, wobei jedoch der Nutzer eines zum Verbindungsaufbau genutzten Handys hierauf gegebenenfalls durch die Signalisierung des günstigeren Tarifs hingewiesen wird und er sich so in seinem Gesprächsverhalten (Gesprächsdauer) auf die Art des Zustandekommens der Verbindung einstellen kann. Anstelle eines Handys kann es sich bei dem Telekommunikationsendgerät 1 auch um einen Laptop mit einer Netzwerkkarte und einer Soundkarte sowie einem Headset handeln, wobei sich dieser dann jedoch, falls er nicht selbst über eine Mobilfunkeinheit verfügt, wie ein Handy verhält, von welchem aus die Gesprächsverbindungen stets unter Einbeziehung der Internetverbindung 8, 13 aufgebaut werden.

Liste der verwendeten Bezugszeichen
- 1: Telekommunikationsendgerät
- 2: Internetzugangseinheit
- 3: Steuereinheit bzw. Controller mit Speichern
- 4: Einheit für drahtgebundene LAN-Verbindung
- 5: Einheit für IR-LAN-Verbindung
- 6: Einheit für WLAN-Verbindung
- 7: Sende-/Empfangseinheit für Mobilfunkverbindung
- 8: Internet
- 9: MSC
- 10: BSC
- 11: BTS
- 12: Funkverbindung
- 13: Verbindung
- 14: optisches Element für IR-Verbindung
- 15: Handy-Resttechnik

## Patentansprüche

1. Verfahren zur Bereitstellung eines Verbindungsweges zu einem Mobilfunknetz, gemäß welchem für den Aufbau einer Telekommunikationsverbindung zwischen einem zur Verwendung in einem Mobilfunknetz ausgebildeten Telekommunikationsendgerät (1) und einer Gegenstelle als Verbindungsweg zwischen dem Telekommunikationsendgerät (1) und den Zugangs- und Vermittlungseinheiten (9, 10, 11) des Mobilfunknetzes wahlweise, nämlich selbsttätig oder veranlasst durch einen Benutzer des Telekommunikationsendgerätes (1), eine Funkverbindung (12), Funkweg, oder eine das Internet (8) einbeziehende Verbindung (13), Internetverbindungsweg, genutzt wird, **dadurch gekennzeichnet, daß** der Internetverbindungsweg (8, 13) durch die Zugangs- und Vermittlungseinheiten (9, 10, 11) sowie das Telekommunikationsendgerät (1), im Hinblick auf die im Zusammenhang mit dem Einschalten des Telekommunikationsendgerätes (1) und seines Einbuchens bzw. Anmeldens beim Mobilfunknetz stehenden Abläufe sowie auf das im Zuge eines Changeover oder eines Handovers erfolgende Umschalten des Verbindungsweges zwischen Funkweg (12) und Internetweg (8, 13) bzw. umgekehrt, wie eine weitere Funkzelle des Mobilfunknetzes behandelt wird.

2. Verfahren nach Anspruch 1, **dadurch gekennzeichnet, dass** der Internetverbindungsweg (8, 13) über eine Internetzugangseinheit (2) aufgebaut wird, welche mit dem Telekommunikationsendgerät (1) in einem LAN, Local Area Network, vernetzbar ist und dass eine der Zugangs- und Vermittlungseinheiten (9, 10, 11) des Mobilfunknetzes von dem Telekommunikationsendgerät (1) über die Internetzugangseinheit (2) und das Internet (8) vermittels einer IP-Adresse angesprochen wird, wobei die LAN-Verbindung des Telekommunikationsendgerätes (1) zur Internetzugangseinheit (2) in herkömmlicher Weise drahtgebunden, über Funk, Wireless LAN - WLAN, oder optisch, nämlich vorzugsweise durch Infrarot-Übertragung, IR-LAN, aufgebaut wird.

3. Verfahren nach Anspruch 1 oder 2, **dadurch gekennzeichnet, dass** der Internetverbindungsweg (8, 13) zu einer Mobilvermittlungseinrichtung, MSC - Mobile Switching Center, (9) geführt wird.

4. Verfahren nach Anspruch 2 oder 3, **dadurch gekennzeichnet, dass** ein zu einer Zugangs- und Vermittlungseinheit (9, 10, 11) des Mobilfunknetzes bestehender Internetverbindungsweg (8, 13) gegebenenfalls vorübergehend auf eine geographisch günstiger gelegene Zugangs- und Vermittlungseinheit geroutet wird, wobei die bei der Konfiguration der Anordnung im Telekommunikationsendgerät (1) hinterlegte IP-Adresse durch die betreffende Zugangs- und Vermittlungseinheit (9, 10, 11) temporär geändert wird.

5. Verfahren nach Anspruch 2 oder 3, **dadurch gekennzeichnet** vor einem Verbindungsaufbau zu einer der Zugangs- und Vermittlungseinheiten (9, 10, 11) des Mobilfunknetzes, unter Übermittlung von Informationen zum aktuellen Funkbereich des Telekommunikationsendgerätes (1), eine Anfrage bei einem Server erfolgt, in deren Ergebnis der Server dem Telekommunikationsendgerät (1) die IP-Adresse für eine bevorzugt anzusprechende Zugangs- und Vermittlungseinheiten (9, 10, 11) des Mobilfunknetzes übermittelt.

6. Verfahren nach Anspruch 2 oder 3, **dadurch gekennzeichnet, dass** im Falle des Herstellens von Telekommunikationsverbindungen unter Nutzung des Internetverbindungswegs (8, 13) durch die Zugangs- und Vermittlungseinheiten (9, 10, 11) des Mobilfunknetzes für diese Telekommunikationsverbindungen die Tariffierung geändert wird.

7. Verfahren nach Anspruch 1 oder 2, **dadurch gekennzeichnet, dass** das Verfahren bezogen auf das Telekommunikationsendgerät (1) den Aufbau ankommender und abgehender Verbindungen unter Nutzung des Internetverbindungswegs (8, 13) erlaubt, wobei für die ankommenden Verbindungen in einem Aufenthaltsregister, VLR - Visited Location Register, der Zugangs- und Vermittlungseinheiten (9, 10, 11) des Mobilfunknetzes als Aufenthaltsangabe, LA - Location Area, das Internet mit der aktuellen Internetadresse, IP-Adresse, sowie gegebenenfalls weiteren Adressierungsinformationen zum Telekommunikationsendgerät (1) gespeichert ist.

8. Verfahren nach Anspruch 6, **dadurch gekennzeichnet, dass** die IP-Adresse sowie die Nummer der zur Kommunikation vermittels eines Internetprotokolls, TCP - Transmission Control Protocol oder UDP - User Datagram Protocol, verwendeten Ports durch einen zyklischen Informationsaustausch fortwährend aktualisiert werden.

9. Verfahren nach Anspruch 1 oder 2, **dadurch gekennzeichnet, dass** bei bestehender Internetverbindung (8, 13) im Falle des Unterschreitens von für diese Verbindung festgelegten Qualitätsparametern oder ihrer Unterbrechung eine automatische Umschaltung der Verbindung auf den Funkweg (12) des Mobilfunknetzes erfolgt, indem die Verbindung auf eine Funkfeststation, BSS - Base Station Subsystem, des Mobilfunknetzes umgeschaltet und vermittels einer Sende-/Empfangsstation, BTS - Base Tranceiver Station, (11) der BSS, welche der dem Aufenthaltsort des Telekommunikationsgeräts (1) entsprechenden Funkzelle zugeordnet ist, und der zugehörigen zentralen Steuereinrichtung, BSC - Base Station Control, (10) der MSC (9) zugeleitet und das VLR entsprechend aktualisiert wird.

10. Anordnung zur Durchführung des Verfahrens nach Anspruch 1, mindestens umfassend ein zur Verwendung in einem Mobilfunknetz vorgesehenes Telekommunikationsendgerät (1), eine mit dem Telekommunikationsendgerät (1) in einem, Local Area Network, LAN, vernetzbare Internetzugangseinheit (2) sowie eine über das Internet (8) IP-adressierbare und in die Infrastruktur eines Mobilfunknetzes, in welchem das mobile Telekommunikationsendgerät (1) verwendbar ist, eingebundene Zugangs- und Vermittlungseinheit (9, 10, 11) des Mobilfunknetzes.

11. Anordnung nach Anspruch 10, **dadurch gekennzeichnet, dass** es sich bei dem Telekommunikationsendgerät (1) um eine Telekommunikationsanlage, TK-Anlage, mit einer Funktionseinheit für den Mobilfunk handelt.

12. Anordnung nach Anspruch 11, **dadurch gekennzeichnet, dass** die TK-Anlage eine Chipkartenleseeinheit zum Lesen von Chipkarten eines Mobilfunkbetreibers aufweist.

13. Anordnung nach Anspruch 11 oder 12, **dadurch gekennzeichnet, dass** die TK-Anlage DSL-fähig ist.

14. Anordnung nach einem der Ansprüche 10 bis 13, **dadurch gekennzeichnet, dass** diese Mittel umfasst, durch welche einem Nutzer des Telekommunikationsendgerätes (1) gegebenenfalls signalisiert wird, dass bei einer Nutzung des Internetverbindungswegs (8, 13) eine gegenüber der Nutzung des Funkverbindungswegs (12) kostengünstigere Verbindung möglich ist.

15. Telekommunikationsendgerät (1) zur Durchführung des Verfahrens nach Anspruch 1, **dadurch gekennzeichnet, dass** dieses als ein Mobiltelefon ausgebildet ist, welches neben den Funktionseinheiten (7, 15) für den Betrieb in einem Mobilfunknetz über eine Steuereinheit (3) mit einem Speicher und Mitteln (4, 5, 6) zur Einbindung des Gerätes in ein Local Area Network, LAN, verfügt, wobei durch die Steuereinheit (3) der Wechsel zwischen unterschiedlichen Betriebsmodi im Hinblick auf eine ausschließlich mobilfunkgestützte, Mobilfunkbetrieb, oder eine zumindest teilweise internetgestützte, Internetbetrieb, Telekommunikation sowie, im Internetbetrieb, der LAN-basierte Datenaustausch mit einer Internetzugangseinheit (2) gesteuert wird.

16. Telekommunikationsendgerät (1) nach Anspruch 15, **dadurch gekennzeichnet, dass** es sich bei den Mitteln zur Einbindung in das LAN um eine Einheit (6) zum drahtlosen bzw. funkgestützten Anschluss an das LAN, WLAN, handelt.

17. Telekommunikationsendgerät (1) nach Anspruch 15 oder 16, **dadurch gekennzeichnet, dass** es sich bei den Mitteln zur Einbindung in das LAN um eine Einheit (5) zum optischen Einkoppeln in das LAN handelt.

18. Telekommunikationsendgerät (1) zur Durchführung des Verfahrens nach Anspruch 1, **dadurch gekennzeichnet, dass** dieses als ein Laptop ausgebildet ist, der über eine Netzwerkkarte zur drahtgebundenen oder drahtlosen Verbindung mit einem Local Area Network, LAN, über eine Soundkarte und ein Headset zur Sprachkommunikation sowie über eine Chipkartenleseeinheit zum Lesen von Chipkarten eines Mobilfunkbetreibers verfügt und somit zumindest für eine Nutzung des Mobilfunknetzes unter Aufbau einer über das Internet (8) geführten Verbindung (13) ausgelegt ist.

## Claims

1. Method for providing a connection path to a mobile radio network, wherein, in order to set up a telecommunications connection between a telecommunications terminal (1) configured for use in a mobile radio network and a remote station, optionally - i.e. automatically or initiated by a user of the telecommunications terminal (1) - either a radio link (12), radio path, or a connection (13) involving the Internet (8), Internet connection path, is used as the connection path between the telecommunications terminal (1) and the access and switching units (9, 10, 11) of the mobile radio network, **characterized in that,** with regard to the operations in connection with the switching-on of the telecommunications terminal (1) and its login into the mobile radio network as well as with regard to the changeover or handover of the connection path between radio path (12) and Internet path (8, 13) and vice versa, the Internet connection path (8, 13) is treated by the access and switching units (9, 10, 11) as well as by the telecommunications terminal (1) as a further radio cell of the mobile radio network.

2. Method according to claim 1, **characterized in that** the Internet connection path (8, 13) is set up through an Internet access unit (2), said Internet access unit (2) being connectable to the telecommunications terminal (1) in a LAN, Local Area Network, wherein one of the access and switching units (9, 10, 11) of the mobile radio network is addressed by the telecommunications terminal (1) through the Internet access unit (2) and the Internet (8) by means of an IP address, the LAN connection between the telecommunications terminal (1) and the Internet access unit (2) being set up in conventional wired manner, by radio, Wireless LAN - WLAN, or by optical means, namely preferably by infrared transmission, IR-LAN.

3. Method according to claim 1 or 2, **characterized in that** the Internet connection path (8, 13) is routed to a mobile switching means, MSC - Mobile Switching Center, (9).

4. Method according to claim 2 or 3, **characterized in that,** where applicable, an Internet connection path (8, 13) to an access and switching unit (9, 10, 11) of the mobile radio network is temporarily routed to a geographically more advantageously located access and switching unit, wherein the IP address stored in the telecommunications terminal (1) upon configuration of the arrangement is temporarily changed by the respective access and switching unit (9, 10, 11).

5. Method according to claim 2 or 3, **characterized in that,** prior to the setting-up of a connection to one of the access and switching units (9, 10, 11) of the mobile radio network, with communication of information on the current radio range of the telecommunications terminal (1), an inquiry is made to a server, the result of said inquiry being that the server informs the telecommunications terminal (1) of the IP address of a preferred access and switching unit (9, 10, 11) of the mobile radio network.

6. Method according to claim 2 or 3, **characterized in that,** where telecommunications connections are established using the Internet connection path (8, 13), the tariffing is changed by the access and switching units (9, 10, 11) of the mobile radio network for those telecommunications connections.

7. Method according to claim 1 or 2, **characterized in that,** based on the telecommunications terminal (1), the method allows incoming and outgoing connections to be set up using the Internet connection path (8, 13), wherein, for the incoming connections, the Internet with the current Internet address, IP address, as well as any further addressing information relating to the telecommunications terminal (1) is saved as the LA - Location Area, in a VLR - Visited Location Register, of the access and switching units (9, 10, 11) of the mobile radio network.

8. Method according to claim 6, **characterized in that** the IP addresses and numbers of the ports used for communication by means of an Internet protocol, TCP - Transmission Control Protocol or UDP - User Datagram Protocol, are continuously updated through a cyclical exchange of information.

9. Method according to claim 1 or 2, **characterized in that,** in the case of an existing Internet connection (8, 13), where defined quality parameters for said connection are no longer met or where the connection is interrupted, the connection is automatically switched over to the radio path (12) of the mobile radio network, wherein the connection is switched over to a BSS (Base Station Subsystem) of the mobile radio network and is forwarded by means of a BTS-Base Transceiver Station, (11) to the BSS associated with the radio cell corresponding to the location of the telecommunications terminal (1) and the corresponding central control means, BSC - Base Station Control, (10) of the MSC (9) and the VLR is suitably updated.

10. Arrangement for implementing the method according to claim 1, comprising at least a telecommunications terminal (1) provided for use in a mobile radio network; an Internet access unit (2) connectable to the telecommunications terminal (1) in a Local Area Network, LAN; and an access and switching unit (9, 10, 11), said access and switching unit (9, 10, 11) being IP-addressable over the Internet (8) and being integrated into the infrastructure of a mobile radio network in which the mobile telecommunications terminal (1) is usable.

11. Arrangement according to claim 10, **characterized in that** the telecommunications terminal (1) is a telecommunications system with a function unit for mobile radio.

12. Arrangement according to claim 11, **characterized in that** the telecommunications system has a chip card reader for reading chip cards of a mobile network operator.

13. Arrangement according to claim 11 or 12, **characterized in that** the telecommunications system is DSL-capable.

14. Arrangement according to any one of claims 10 to 13, **characterized in that** said arrangement comprises means by which, where applicable, to inform a user of the telecommunications terminal (1) that using the Internet connection path (8, 13) will allow a cheaper connection compared with using the radio connection path (12).

15. Telecommunications terminal (1) for implementing the method according to claim 1, **characterized in that** said telecommunications terminal (1) is in the form of a mobile phone having, in addition to the function units (7, 15) for operation in a mobile radio network, a control unit (3) with a memory and means (4, 5, 6) for connection to a Local Area Network, LAN, wherein the control unit (3) controls the switching between different operating modes in relation to exclusively mobile-radio-based telecommunication, mobile radio mode, or at least partially Internet-based telecommunication, Internet mode, wherein, in Internet mode, said control unit (3) further controls the LAN-based exchange of data with an Internet access unit (2).

16. Telecommunications terminal (1) according to claim 15, **characterized in that** the means for connection to the LAN are a unit (6) for wireless or radio-based connection to the LAN, WLAN.

17. Telecommunications terminal (1) according to claim 15 or 16, **characterized in that** the means for connection to the LAN are a unit (5) for optical connection to the LAN.

18. Telecommunications terminal (1) for implementing the method according to claim 1, **characterized in that** said telecommunications terminal (1) is in the form of a laptop having a network card for wired or wireless connection to a Local Area Network, LAN; a sound card and a headset for voice communication as well as a chip card reader for reading chip cards of a mobile network operator, said laptop thus being designed at least for using the mobile radio network by setting up a connection (13) routed over the Internet (8).

## Revendications

1. Procédé de mise en oeuvre d'une voie de connexion vers un réseau de téléphonie mobile selon lequel, pour établir une connexion de télécommunications entre un équipement terminal de télécommunications (1) conçu pour être utilisé dans un réseau de téléphonie mobile, et un poste correspondant, on utilise facultativement, notamment automatiquement ou de manière induite par un utilisateur de l'équipement terminal de télécommunications (1), soit une connexion radio (12), voie de connexion par radio, soit une connexion (13) intégrant l'internet (8), voie de connexion par Internet, comme voie de connexion entre l'équipement terminal de télécommunications (1) et les unités d'accès et de commutation (9, 10, 11) du réseau de téléphonie mobile, **caractérisé en ce que** la voie de connexion par Internet (8, 13) est traitée comme une cellule supplémentaire du réseau de téléphonie mobile par les unités d'accès et de commutation (9, 10, 11) ainsi que par l'équipement terminal de télécommunications (1) en ce qui concerne les processus liés à l'activation de l'équipement terminal de télécommunications (1) et à la connexion ou la présentation de celui-ci au réseau de téléphonie mobile ainsi que la commutation de la voie de connexion survenant au cours d'un changeover ou d'un handover entre la voie de connexion par radio (12) et la voie de connexion par Internet (8, 13) ou vice-versa.

2. Procédé selon la revendication 1, **caractérisé en ce que** la voie de connexion par Internet (8, 13) est établie par l'intermédiaire d'une unité d'accès à l'internet (2) apte à être interconnectée, avec l'équipement terminal de télécommunications (1), dans un réseau local LAN, Local Area Network, et **en ce que** l'une des unités d'accès et de commutation (9, 10, 11) du réseau de téléphonie mobile est adressée par l'équipement terminal de télécommunications (1) par l'intermédiaire de l'unité d'accès à l'internet (2) et de l'internet (8) est adressé par l'intermédiaire d'une adresse IP, la connexion LAN de l'équipement terminal de télécommunications (1) à l'unité d'accès à l'internet (2) étant établie de manière conventionnelle par fil, par radio, wireless LAN - WLAN - ou de manière optique, notamment de préférence par transmission infrarouge, IR-LAN.

3. Procédé selon la revendication 1 ou 2, **caractérisé en ce que** la voie de connexion par Internet (8, 13) est amenée à un équipement de commutation mobile, MSC - Mobile Switching Center - (9).

4. Procédé selon la revendication 2 ou 3, **caractérisé en ce qu'**une voie de connexion par Internet (8, 13) existante vers une unité d'accès et de commutation (9, 10, 11) du réseau de téléphonie mobile est, le cas échéant, temporairement redirigée vers une unité d'accès et de commutation mieux située géographiquement, l'adresse IP stockée dans l'équipement terminal de télécommunications (1) lors de la configuration du dispositif étant temporairement modifiée par l'unité d'accès et de communication (9, 10, 11) concernée.

5. Procédé selon la revendication 2 ou 3, **caractérisé en ce que,** avant l'établissement d'une connexion vers l'une des unités d'accès et de commutation (9, 10, 11) du réseau de téléphonie mobile, une interrogation d'un serveur a lieu avec transmission d'informations relatives à la zone radio actuelle de l'équipement terminal de télécommunications (1), dans le résultat de laquelle le serveur transmet, à l'équipement terminal de télécommunications (1), l'adresse IP pour une unité d'accès et de commutation (9, 10, 11) du réseau de téléphonie mobile à adresser de préférence.

6. Procédé selon la revendication 2 ou 3, **caractérisé en ce que,** si les unités d'accès et de commutation (9, 10, 11) du réseau de téléphonie mobile établissent des connexions de télécommunication en utilisant la voie de connexion par Internet (8, 13), la tarification pour ces connexions de télécommunication sera modifiée.

7. Procédé selon la revendication 1 ou 2, **caractérisé en ce que,** rapporté à l'équipement terminal de télécommunications (1), le procédé autorise l'établissement de connexions entrantes et sortantes en utilisant la voie de connexion par Internet (8, 13), pour les connexions entrantes, l'internet avec l'adresse Internet actuelle, adresse IP, ainsi que, le cas échéant, d'autres informations d'adressage relatives à l'équipement terminal de télécommunications (1), étant stocké comme indication de localisation, LA - Location Area -, dans un registre de localisation, VLR - Visited Location Register -, des unités d'accès et de commutation (9, 10, 11) du réseau de téléphonie mobile.

8. Procédé selon la revendication 6, **caractérisé en ce que** l'adresse IP ainsi que le numéro du port utilisé pour la communication par l'intermédiaire d'un protocole Internet, TCP - Transmission Control Protocol - ou UDP - User Datagram Protocol -, sont actualisés en permanence par un échange d'informations cyclique.

9. Procédé selon la revendication 1 ou 2, **caractérisé en ce que**, si pour une connexion Internet (8, 13) existante, les paramètres de qualité définis pour cette connexion ne sont pas atteints ou si elle est interrompue, la connexion est automatiquement basculée sur la voie de connexion par radio (12) du réseau de téléphonie mobile, la connexion étant basculée sur une station radio fixe, BSS - Base Station Subsystem -, du réseau de téléphonie mobile, et acheminée vers le MSC (9) par l'intermédiaire d'une station émettrice/réceptrice, BTS - Base Tranceiver Station -, (11) de la BSS associée à la cellule radio correspondant à la localisation de l'équipement terminal de télécommunications (1), et du système de commande central correspondant, BSC - Base Station Control -, (10), et le VLR étant actualisé en conséquence.

10. Dispositif pour mettre en oeuvre le procédé selon la revendication 1, comprenant au moins un équipement terminal de télécommunications (1) prévu pour être utilisé dans un réseau de téléphonie mobile, une unité d'accès à l'internet (2) apte à être interconnectée avec l'équipement terminal de télécommunications (1) dans un réseau local, Local Area Netwok, LAN, ainsi qu'une unité d'accès et de commutation (9, 10, 11) du réseau téléphonie mobile adressable IP par l'intermédiaire de l'internet (8) et intégrée dans l'infrastructure d'un réseau de téléphonie mobile dans lequel peut être utilisé l'équipement terminal de télécommunications (1).

11. Dispositif selon la revendication 10, **caractérisé en ce que** l'équipement terminal de télécommunications (1) est un équipement de télécommunication comprenant une unité fonctionnelle pour la téléphonie mobile.

12. Dispositif selon la revendication 11, **caractérisé en ce que** l'équipement de télécommunications comprend une unité de lecture de cartes à puce pour la lecture de cartes à puce d'un opérateur de téléphonie mobile.

13. Dispositif selon la revendication 11 ou 12, **caractérisé en ce que** l'équipement de télécommunications est éligible ADSL.

14. Dispositif selon l'une des revendications 10 à 13, **caractérisé en ce qu'**il comprend des moyens signalant, le cas échéant, à un utilisateur de l'équipement terminal de télécommunications (1) qu'en utilisant la voie de connexion par Internet (8, 13), il peut obtenir une connexion à moindre coût par rapport à la voie de connexion par radio (12).

15. Équipement terminal de télécommunications (1) pour mettre en oeuvre le procédé selon la revendication 1, **caractérisé en ce qu'**il est réalisé sous la forme d'un téléphone mobile qui dispose, outre des unités fonctionnelles (7, 15) pour le fonctionnement dans un réseau de téléphonie mobile, d'une unité de commande (3) dotée d'une mémoire et de moyens (4, 5, 6) pour intégrer l'appareil dans un réseau local, Local Area Network, LAN, l'unité de commande (3) assurant la commande du passage entre les différents modes de fonctionnement pour une télécommunication exclusivement supportée par la téléphonie mobile, fonctionnement en téléphonie mobile, ou au moins partiellement supportée par l'internet, fonctionnement en Internet, et la commande de l'échange de données LAN dans le fonctionnement en Internet à l'aide d'une unité d'accès à l'internet (2).

16. Équipement terminal de télécommunications (1) selon la revendication 15, **caractérisé en ce que** les moyens d'intégration dans le LAN sont une unité (6) de raccordement sans fil / par radio au LAN, WLAN.

17. Équipement terminal de télécommunications (1) selon la revendication 15 ou 16, **caractérisé en ce que** les moyens d'intégration dans le LAN sont une unité (5) de couplage optique au LAN.

18. Équipement terminal de télécommunications (1) pour la mise en oeuvre du procédé selon la revendication 1, **caractérisé en ce qu'**il est réalisé sous la forme d'un ordinateur portable qui dispose d'une carte réseau pour la connexion par fil ou sans fil à un réseau local, Local Area Network, LAN, d'une carte son et d'un casque pour la communication vocale, ainsi que d'une unité de lecture de cartes à puce pour la lecture de cartes à puce d'un opérateur de téléphonie mobile, et qui est ainsi conçu au moins pour une utilisation du réseau de téléphonie mobile en établissant une connexion (13) passant par l'internet (8).
